# EUROPEAN PATENT APPLICATION

(11) **EP 4 001 620 A1**
(43) Date of publication of application: **25.05.2022**
(21) Application number: 21198483.6
(22) Date of filing: 23.09.2021
(51) Int. Cl.: F02D 9/10, F16K 1/22

(54) **BUTTERFLY VALVE DEVICE**

(30) Priority: 20.11.2020 JP 2020193904
(71) Applicant: MIKUNI CORPORATION, Chiyoda-ku Tokyo 101-0021 (JP)
(72) Inventor: TANAKA, Naoki, Odawara-shi, 2500055 (JP)
(74) Representative: Becker, Eberhard

(57) **Abstract**

A butterfly valve device includes: a body (10) that defines a passage (13) through which a fluid flows and a bearing hole (14) arranged on an axis (S); a shaft (20) that is rotatably passed through the bearing hole, has a two-sided width portion (23) formed in a region facing the passage and a slit hole (24) penetrating a center of the two-sided width portion, and has a columnar outer contour; and a butterfly valve (30) that is fitted into the slit hole and fixed to the shaft to open and close the passage. In a surface region where the two-sided width portion of the shaft and the butterfly valve are close to each other, the butterfly valve device has a step suppressing portion (27, 28) that suppresses a step so as to make the fluid flow streamlined when the butterfly valve is fully opened.

## Description

### BACKGROUND

### Technical Field

The disclosure relates to a butterfly valve device including a butterfly valve that opens and closes a fluid passage, and particularly relates to a butterfly valve device that is applied to an intake system or an exhaust system of an engine mounted on a vehicle such as a motorcycle or the like to adjust an intake or exhaust flow rate.

### Related Art

A conventional butterfly valve including a disk-shaped valve body and a rotation shaft that supports the valve body to be rotatable has been known, wherein two bosses that bulge in a thickness direction of the valve body and are separated from each other and face each other are arranged, and the rotation shaft is fitted to each of the two bosses (for example, see Patent literature 1).

In the butterfly valve, although resistance to a fluid flow is reduced because a central region of the valve body does not bulge in the thickness direction, when the butterfly valve is assembled to a body defining a passage, it is necessary to insert the rotation shaft from both sides of a bearing hole of the body into the valve body and fit the rotation shaft to the valve body in a state where the valve body is held in the passage in advance, and the assembly is not easy.

In addition, a conventional butterfly valve device has been known, which includes: a body that defines a passage and a bearing hole; a disk-shaped valve body; a pair of front/back plate-shaped support shafts that sandwich the valve body; and two shaft portions that are fitted into the bearing hole of the body and have concave portions in which both end portions of the pair of support shafts are inserted (for example, see Patent literature 2).

In the butterfly valve device, because the pair of front/back support shafts form a plate shape with a substantially rectangular cross section, when the valve body is fully opened, a fluid flowing along a surface of the valve body may collide with a stepped part forming an upright wall of the pair of support shafts and be disturbed, or vortices and turbulence may occur on a downstream side of the support shafts to cause reduction of a flow rate.

In addition, because the pair of front/back support shafts forming a plate shape and the two shaft portions inserted into the bearing holes of the body are included as shaft members, the number of component parts is large and the structure is complicated. Furthermore, when the valve body is assembled into the passage of the body, after the valve body is assembled in a manner of being sandwiched between the pair of front/back support shafts, both end portions of the pair of front/back support shafts must be inserted into the bearing holes of the body from the passage side, and the assembly is not easy.

### [Literature of related art]

### [Patent literature]

[Patent literature 1] Japanese Patent Laid-Open No. H08-014408
[Patent literature 2] Japanese Patent Laid-Open No. H08-004906

### SUMMARY

The disclosure has been made in view of the above circumstances, and an objective of the disclosure is to provide a butterfly valve device that can simplify a structure, facilitate an assembly work, reduce flow resistance of a fluid, and increase a flow rate when the butterfly valve is fully opened.

A butterfly valve device of the disclosure has a configuration including: a body that defines a passage through which a fluid flows and a bearing hole arranged on a predetermined axis; a shaft that is rotatably passed through the bearing hole, has a two-sided width portion formed in a region facing the passage and a slit hole penetrating a center of the two-sided width portion, and has a columnar outer contour; and a butterfly valve that is fitted into the slit hole and fixed to the shaft to open and close the passage. In a surface region where the two-sided width portion of the shaft and the butterfly valve are close to each other, the butterfly valve device has a step suppressing portion that suppresses a step so as to make the fluid flow streamlined when the butterfly valve is fully opened.

The butterfly valve device may have a configuration in which the shaft has a countersink female screw hole through which a fastening screw is screwed in a region of the two-sided width portion, and the butterfly valve has a through hole through which the fastening screw is passed when the butterfly valve is fitted in the slit hole.

The butterfly valve device may have a configuration in which the step suppressing portion includes an upstream chamfered portion formed on the shaft in an upstream region of the two-sided width portion when the butterfly valve is fully opened.

The butterfly valve device including the upstream chamfered portion may have a configuration in which the upstream chamfered portion is formed in a manner of being inclined downward on the upstream side starting from a countersink outer edge of the countersink female screw hole.

The butterfly valve device including the upstream chamfered portion may have a configuration in which the shaft includes a concave curved portion continuous from the two-sided width portion to the outer contour in a region facing the passage on both sides of the two-sided width portion in the axis direction, and the step suppressing portion includes an upstream curved chamfered portion formed on the shaft in an upstream region of the concave curved portion when the butterfly valve is fully opened.

The butterfly valve device may have a configuration in which the step suppressing portion includes a downstream chamfered portion formed on the shaft in a downstream region of the two-sided width portion when the butterfly valve is fully opened.

The butterfly valve device including the downstream chamfered portion may have a configuration in which the downstream chamfered portion is formed in a manner of being inclined downward on the downstream side starting from a countersink outer edge of the countersink female screw hole.

The butterfly valve device including the downstream chamfered portion may have a configuration in which the shaft includes a concave curved portion continuous from the two-sided width portion to the outer contour in a region facing the passage on both sides of the two-sided width portion in the axis direction, and the step suppressing portion includes a downstream curved chamfered portion formed on the shaft in a downstream region of the concave curved portion when the butterfly valve is fully opened.

The butterfly valve device may have a configuration in which the step suppressing portion includes an upstream chamfered portion formed on the shaft in an upstream region of the two-sided width portion when the butterfly valve is fully opened, and a downstream chamfered portion formed on the shaft in a downstream region of the two-sided width portion when the butterfly valve is fully opened.

The butterfly valve device including the upstream chamfered portion and the downstream chamfered portion may have a configuration in which the upstream chamfered portion is formed in a manner of being inclined downward on the upstream side starting from a countersink outer edge of the countersink female screw hole, and the downstream chamfered portion is formed in a manner of being inclined downward on the downstream side starting from the countersink outer edge of the countersink female screw hole.

The butterfly valve device including the upstream chamfered portion and the downstream chamfered portion may have a configuration in which the shaft includes a concave curved portion continuous from the two-sided width portion to the outer contour in a region facing the passage on both sides of the two-sided width portion in the axis direction, and the step suppressing portion includes an upstream curved chamfered portion formed on the shaft in an upstream region of the concave curved portion when the butterfly valve is fully opened, and a downstream curved chamfered portion formed on the shaft in a downstream region of the concave curved portion when the butterfly valve is fully opened.

The butterfly valve device may have a configuration in which the butterfly valve is formed in a manner of being inserted into the slit hole from the upstream side with respect to the shaft assembled in the bearing hole of the body, and the step suppressing portion includes an upstream tapered surface which is formed on the butterfly valve and whose plate thickness increases from the upstream side toward the two-sided width portion when the butterfly valve is fully opened.

The butterfly valve device may have a configuration in which the butterfly valve is formed in two parts including an upstream valve that is inserted into the slit hole from an upstream side and a downstream valve that is inserted into the slit hole from a downstream side with respect to the shaft assembled in the bearing hole of the body, and the step suppressing portion includes an upstream tapered surface which is formed on the upstream valve and whose plate thickness increases from the upstream side toward the two-sided width portion when the butterfly valve is fully opened, and a downstream tapered surface which is formed on the downstream valve and whose plate thickness increases from the downstream side toward the two-sided width portion when the butterfly valve is fully opened.

The butterfly valve device including the upstream chamfered portion and the downstream chamfered portion may have a configuration in which when an angle formed by the upstream chamfered portion and the two-sided width portion is α and an angle formed by the downstream chamfered portion and the two-sided width portion is β, the two angles are set to satisfy angle α = angle β.

The butterfly valve device satisfying angle α = angle β may have a configuration in which the angle α and the angle β are set in a range of 10° to 46.5°.

The butterfly valve device including the upstream chamfered portion may have a configuration in which when an angle formed by the upstream chamfered portion and the two-sided width portion is α, the angle α is set in a range of 10° to 46.5°.

The butterfly valve device including the downstream chamfered portion may have a configuration in which when an angle formed by the downstream chamfered portion and the two-sided width portion is β, the angle β is set in a range of 10° to 40°.

The butterfly valve device may have a configuration in which when an outer diameter of the shaft is D and a width dimension of the two-sided width portion in an outer diameter direction of the shaft is W1, the width dimension W1 is set in a range of 0.4 × D to 0.7 × D.

According to the butterfly valve device having the above configuration, simplification of the structure, facilitation of the assembling work, reduction of the flow resistance of the fluid, increase of the flow rate when the butterfly valve is fully opened, and the like can be achieved.

### BRIEF DESCRIPTION OF THE DRAWINGS

FIG. 1 is a perspective external view showing a first embodiment of a butterfly valve device according to the disclosure.
FIG. 2 is a perspective cross-sectional view in which the butterfly valve device according to the first embodiment is cut in a cross section taken along a passage.
FIG. 3 is a cross-sectional view in which the butterfly valve device according to the first embodiment is cut in a plane that includes an axis of a shaft and is perpendicular to the passage, and is viewed from an upstream side.
FIG. 4 is a perspective view in which the shaft and a butterfly valve included in the butterfly valve device according to the first embodiment are viewed from one surface of the butterfly valve and diagonally from the upstream side.
FIG. 5 is a perspective view in which the shaft and the butterfly valve included in the butterfly valve device according to the first embodiment are viewed from the other surface of the butterfly valve and diagonally from the upstream side.
FIG. 6 is an exploded perspective view in which the shaft and the butterfly valve are disassembled.
FIG. 7 is a cross-sectional view in which the shaft and the butterfly valve are cut in a central plane perpendicular to the axis of the shaft.
FIG. 8 is a cross-sectional view in which the shaft and the butterfly valve are cut in a plane perpendicular to the axis of the shaft and passing through a fastening screw.
FIG. 9 is a graph showing a relationship between an angle and a flow rate of an upstream chamfered portion and a downstream chamfered portion in the first embodiment.
FIG. 10 is a graph showing a relationship between an angle and a flow rate when the angle of the downstream chamfered portion is kept constant and the angle of the upstream chamfered portion is changed in the first embodiment.
FIG. 11 shows a second embodiment in which the upstream chamfered portion is arranged only on an upstream side of a two-sided width portion of the shaft, and is a cross-sectional view in which the shaft and the butterfly valve are cut in a central plane perpendicular to the axis of the shaft.
FIG. 12 is a graph showing a relationship between an angle and a flow rate of the upstream chamfered portion in the second embodiment.
FIG. 13 shows a third embodiment in which the downstream chamfered portion is arranged only on a downstream side of the two-sided width portion of the shaft, and is a cross-sectional view in which the shaft and the butterfly valve are cut in a central plane perpendicular to the axis of the shaft.
FIG. 14 is a graph showing a relationship between an angle and a flow rate of the downstream chamfered portion in the third embodiment.
FIG. 15 shows a fourth embodiment of the butterfly valve device according to the disclosure, and is a perspective view when viewed from one surface of a butterfly valve and diagonally from the upstream side.
FIG. 16 is a cross-sectional view in which the shaft and the butterfly valve are cut in a central plane perpendicular to the axis of the shaft in the fourth embodiment.
FIG. 17 is a cross-sectional view in which the shaft and the butterfly valve are cut in a plane perpendicular to the axis of the shaft and passing through the fastening screw in the fourth embodiment.
FIG. 18 shows a fifth embodiment in which the upstream chamfered portion is also arranged on the upstream side of the two-sided width portion of the shaft in the fourth embodiment, and is a cross-sectional view in which the shaft and a butterfly valve are cut in a central plane perpendicular to the axis of the shaft.
FIG. 19 shows a sixth embodiment of the butterfly valve device according to the disclosure, and is an exploded perspective view in which the shaft and a butterfly valve that has a two-divided structure including an upstream valve and a downstream valve are disassembled.
FIG. 20 is a cross-sectional view in which the shaft and the butterfly valve are cut in a plane including the axis of the shaft and dividing the butterfly valve into two parts in a thickness direction in a state where the butterfly valve is fixed to the shaft in the sixth embodiment.
FIG. 21 is a cross-sectional view in which the shaft and the butterfly valve are cut in a central plane perpendicular to the axis of the shaft in the sixth embodiment.
FIG. 22 shows a seventh embodiment in which the upstream chamfered portion and the downstream chamfered portion are arranged on the upstream side and the downstream side of the two-sided width portion of the shaft in the sixth embodiment, and is a cross-sectional view in which the shaft and a butterfly valve are cut in a central plane perpendicular to the axis of the shaft.

### DESCRIPTION OF THE EMBODIMENTS

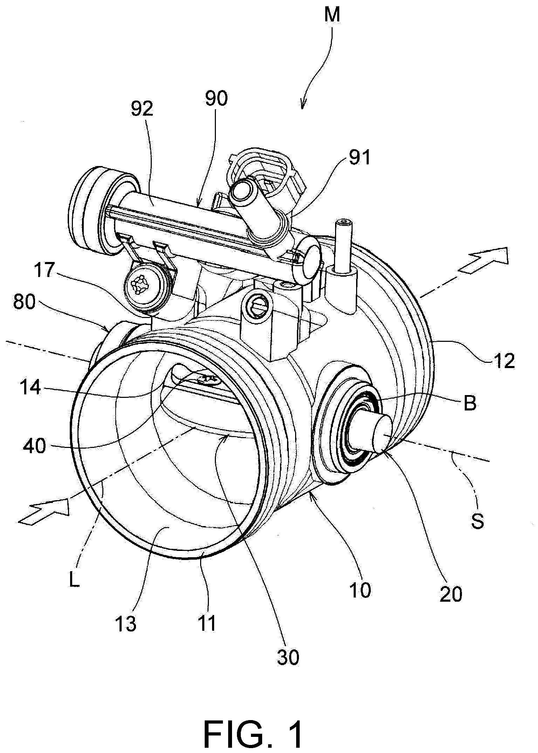

Hereinafter, embodiments of the disclosure are described with reference to the accompanying drawings.
A butterfly valve device M according to a first embodiment functions as a throttle device installed in an intake system of an engine mounted on a motorcycle.
As shown in FIGS. 1 to 3, the butterfly valve device M includes a body 10, a shaft 20 rotationally driven by a drive mechanism (not shown), a butterfly valve 30, two fastening screws 40, two bearings B, an urging spring 50 that urges the shaft 20 toward one direction of an axis S direction, a spring receiving member 60, a C-shaped retaining ring 70, a cap 80, and a fuel injection system 90.

As the drive mechanism, a gear train, which is attached to a connection portion 22b of the shaft 20 and transmits a rotation force of a drum or a motor that connects throttle wires, or the like is adopted.
In addition, the fuel injection system 90 includes an injector 91 for injecting fuel and a feed pipe 92 for supplying fuel.

The body 10 is made of a metal material such as aluminum or the like, and includes an upstream flange portion 11, a downstream flange portion 12, a passage 13 through which a fluid flows, two bearing holes 14 arranged on the axis S to pass the shaft 20, an accommodating recess 15 for accommodating the urging spring 50, a fitting hole 16 for fitting the injector 91 included in the fuel injection system 90, and an attaching boss portion 17.

The upstream flange portion 11 is connected to a passage member that defines an upstream passage in the intake system, for example, an intake duct or an intake tube. The downstream flange portion 12 is connected to a passage member that defines a downstream passage in the intake system, for example, a cylinder head or an intake tube adjacent to the cylinder head.
The passage 13 has a cylindrical shape extending in an axis L direction so as to pass intake air serving as a fluid.

The two bearing holes 14 are arranged side by side on the axis S perpendicular to the axis L, and are circular holes through which the shaft 20 is rotatably passed. Besides, each of the two bearing holes 14 includes a small-diameter hole 14a through which the shaft 20 is passed with a minute gap and a large-diameter hole 14b into which the bearing B is fitted.

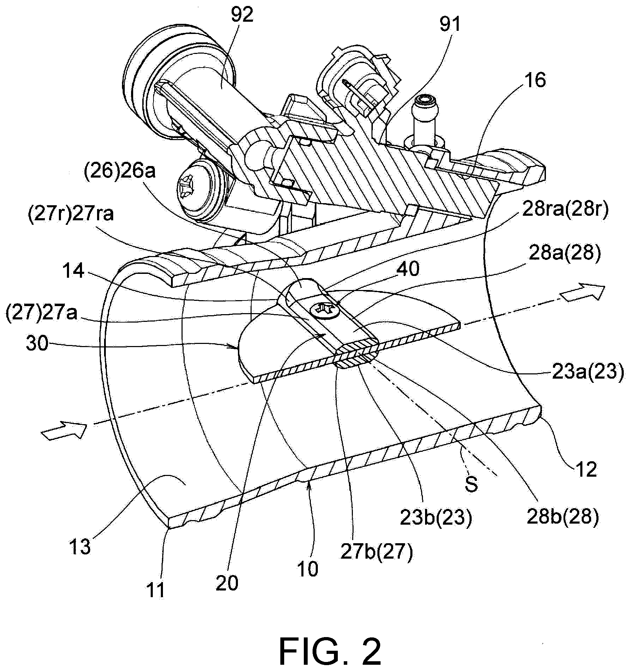

The accommodating recess 15 is continuous with one bearing hole 14 in the axis S direction, and accommodates the urging spring 50 and the spring receiving member 60.
As shown in FIG. 2, the fitting hole 16 is formed so as to fit the injector 91 that injects fuel diagonally downstream on the downstream side of the butterfly valve 30.
The attaching boss portion 17 is formed so as to fix the feed pipe 92 included in the fuel injection system 90 with screws.

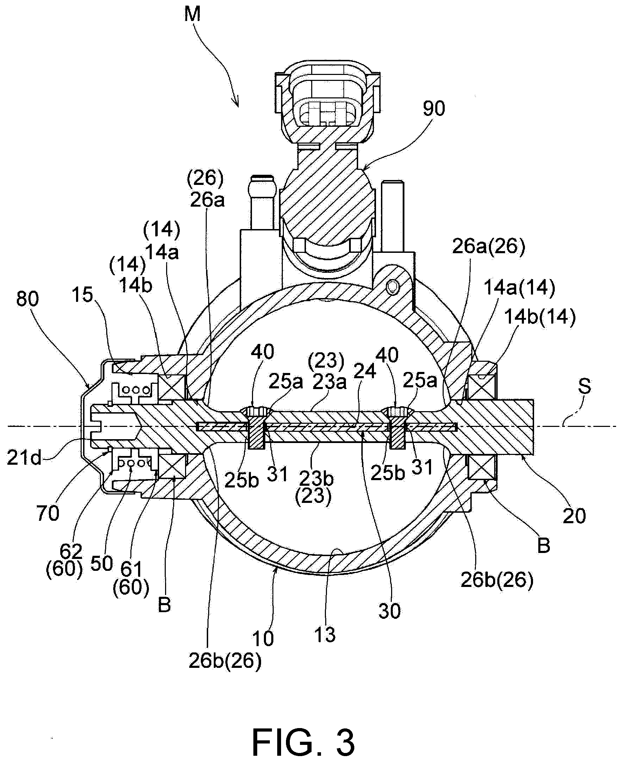

The shaft 20 is formed by appropriately cutting a metal rod material having a columnar outer contour, that is, a circular cross section and extending in the axis S direction.
Besides, as shown in FIGS. 3 to 5, the shaft 20 includes one end portion 21, the other end portion 22, a two-sided width portion 23 formed in a region facing the passage 13, a slit hole 24 into which the butterfly valve 30 is fitted, two countersink female screw holes 25 through which the fastening screw 40 is passed, a concave curved portion 26, an upstream chamfered portion 27 and an upstream curved chamfered portion 27r serving as step suppressing portions, and a downstream chamfered portion 28 and a downstream curved chamfered portion 28r serving as step suppressing portions.

The one end portion 21 is inserted into one bearing hole 14, and includes a columnar portion 21a, a small-diameter columnar portion 21b, an annular groove 21c, and a connection hole 21d.
The columnar portion 21a has an outer diameter D, is inserted into the small-diameter hole 14a with a minute gap, and is fitted to the bearing B to be rotatably supported.
The small-diameter columnar portion 21b is formed to have an outer diameter slightly smaller than the outer diameter D of the columnar portion 21a, and supports the spring receiving member 60 that receives the urging spring 50 to be movable in the axis S direction.
The annular groove 21c is formed in a manner that the C-shaped retaining ring 70 is fitted by snap fitting.
The connection hole 21d is formed in a manner that a tool or the like can be connected in order to appropriately adjust a rotation angle position of the shaft 20 at the time of assembly or at the time of inspection or adjustment after assembly.

The other end portion 22 is inserted into the other bearing hole 14, and includes a columnar portion 22a and the connection portion 22b to which the drive mechanism is connected.
The columnar portion 22a has an outer diameter D, is inserted into the small-diameter hole 14a with a minute gap, and is fitted to the bearing B to be rotatably supported.
The connection portion 22b is a region connected to the drive mechanism (not shown), and is formed so that the connection portion 22b protrudes from the body 10 in the axis S direction and the drive mechanism is connected thereto. Here, the connection portion 22b is shown as a flat surface because the drive mechanism is omitted.

As shown in FIG. 3, in the region facing the passage 13 of the body 10, the two-sided width portion 23 is formed by cutting a columnar member with an outer diameter D so as to define two parallel flat surfaces 23a and 23b that are equally spaced apart in a radial direction centered on the axis S.
Here, a width dimension W1 of the two-sided width portion 23 in an outer diameter direction of the shaft 20 is made small in order to reduce flow resistance of the fluid, that is, to increase a passage area of the fluid flowing through the passage 13, and is formed into a dimension that can ensure mechanical strength. Specifically, the width dimension W1 is set in a range of 0.4 × D to 0.7 × D in relation to the outer diameter D of the shaft 20.

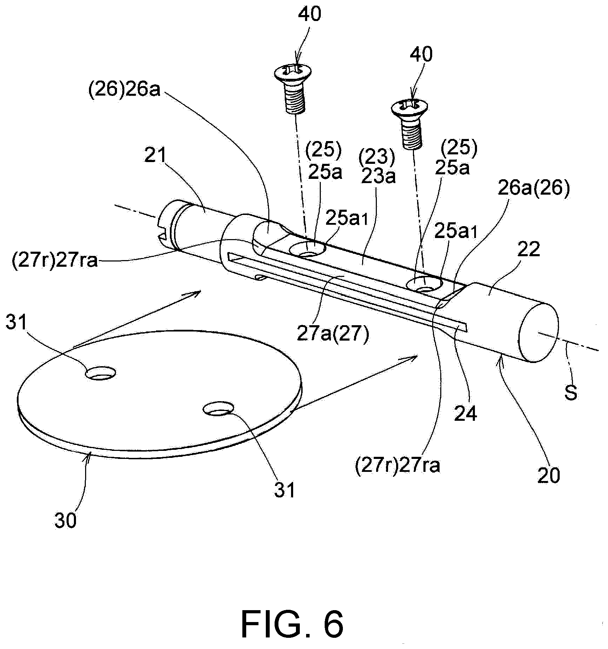

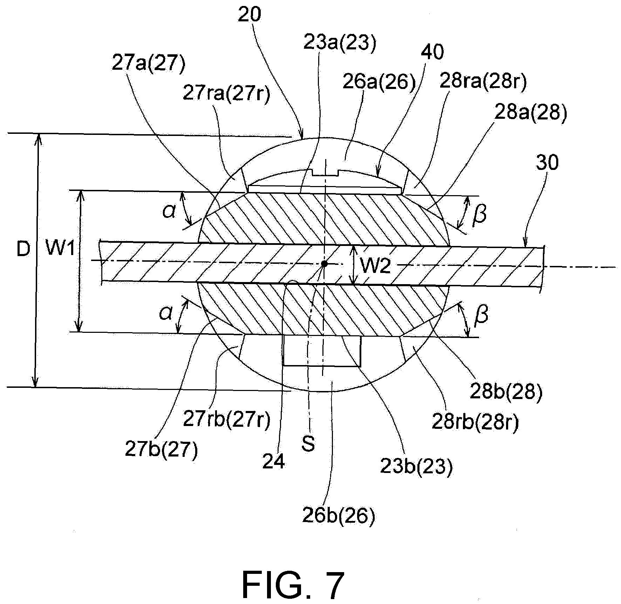

As shown in FIGS. 6 and 7, the slit hole 24 is formed in a manner of penetrating a center of the two-sided width portion 23 and extending in the axis S direction.
Here, a width dimension W2 of the slit hole 24 in the outer diameter direction of the shaft 20 is formed into a dimension that allows the butterfly valve 30 to be fitted without rattling, that is, a dimension equal to or slightly larger than a plate thickness of a fitting part of the butterfly valve 30. In addition, the width dimension W2 of the slit hole 24 is set in a range of 0.3 × W1 to 0.5 × W1 in relation to the width dimension W1 of the two-sided width portion 23.

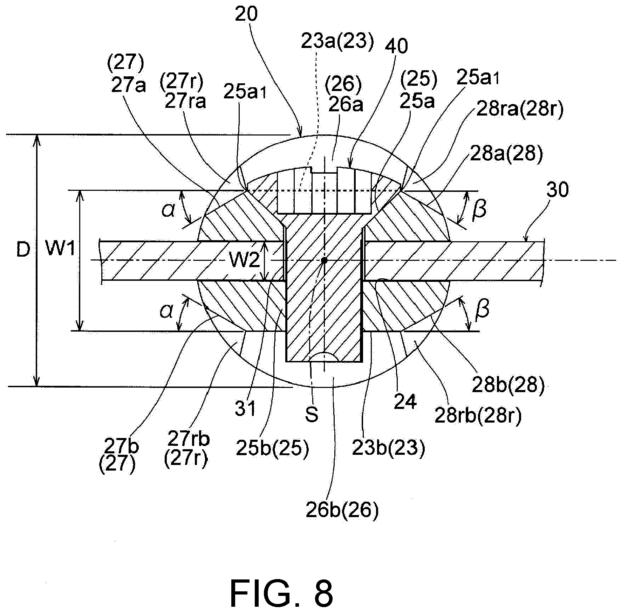

As shown in FIGS. 6 and 8, the two countersink female screw holes 25 are formed in a region of the two-sided width portion 23, and through which the fastening screw 40 are screwed respectively, and includes a conical countersink 25a that defines a countersink outer edge 25a₁ on the flat surface 23a side of the two-sided width portion 23 and a female screw 25b on the flat surface 23b side of the two-sided width portion 23.

As shown in FIGS. 3 to 6, the concave curved portion 26 is formed as a concave curved surface continuous with a columnar outer contour having an outer diameter D from the two-sided width portion 23, in a region facing the passage 13 and adjacent to the bearing hole 14 on both sides of the two-sided width portion 23 in the axis S direction.
Besides, the concave curved portion 26 includes a first curved portion 26a continuous with both ends of the flat surface 23a on one side of the two-sided width portion 23, and a second curved portion 26a continuous with both ends of the flat surface 23b on the other side of the two-sided width portion 23.
In this way, by arranging the concave curved portion 26, stress concentration in regions on both sides of the two-sided width portion 23 can be suppressed and prevented, and the flow resistance of the fluid can be reduced.

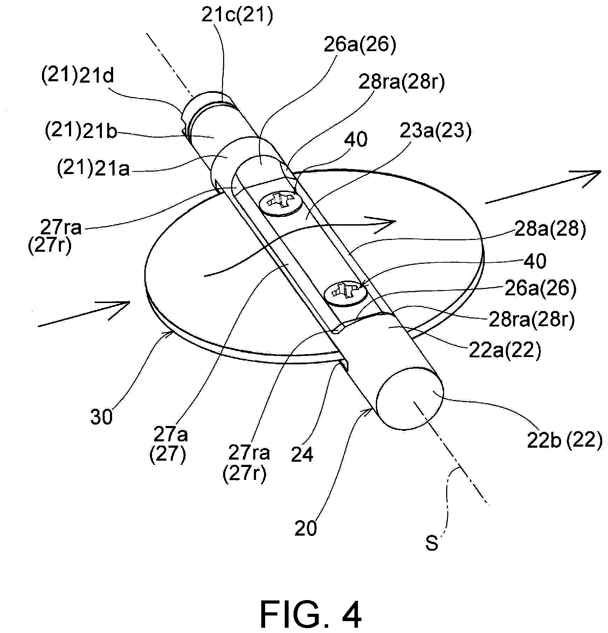

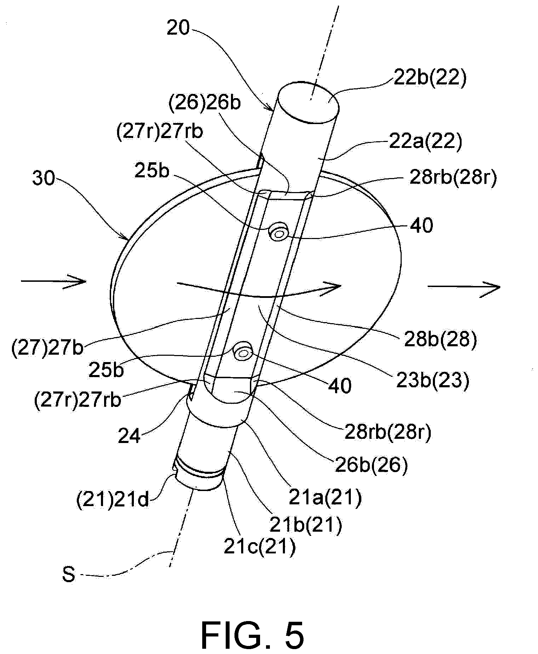

As shown by arrows in FIG. 4 and FIG. 5, the upstream chamfered portion 27 serves to suppress a step to make the fluid flow streamlined in a surface region where the two-sided width portion 23 of the shaft 20 and the butterfly valve 30 are close to each other, that is, in an upstream region of the two-sided width portion 23 when the butterfly valve 30 is fully opened.
The upstream chamfered portion 27 includes a first chamfered portion 27a formed on an upstream side of the flat surface 23a on one side of the two-sided width portion 23, and a second chamfered portion 27b formed on an upstream side of the flat surface 23b on the other side of the two-sided width portion 23.
As shown in FIGS. 7 and 8, the first chamfered portion 27a is formed as a flat surface that inclines downward on the upstream side starting from the countersink outer edge 25a₁ so as not to enter the countersink female screw hole 25.
The second chamfered portion 27b is formed symmetrically with the first chamfered portion 27a with respect to a plane including a central surface of the slit hole 24 and the axis S.

The upstream curved chamfered portion 27r serves to suppress a step to make the fluid flow streamlined in the surface region where the two-sided width portion 23 of the shaft 20 and the butterfly valve 30 are close to each other, that is, in an upstream region of the concave curved portion 26 when the butterfly valve 30 is fully opened.
The upstream curved chamfered portion 27r includes a first curved chamfered portion 27ra formed on an upstream side of the first curved portion 26a, and a second curved chamfered portion 27rb formed on an upstream side of the second curved portion 26b.
The first curved chamfered portion 27ra is formed as a concave curved surface continuous with the first chamfered portion 27a and the first curved portion 26a.
The second curved chamfered portion 27rb is formed as a concave curved surface continuous with the second chamfered portion 27b and the second curved portion 26b.

As shown by the arrows in FIG. 4 and FIG. 5, the downstream chamfered portion 28 serves to suppress a step to make the fluid flow streamlined in the surface region where the two-sided width portion 23 of the shaft 20 and the butterfly valve 30 are close to each other, that is, in a downstream region of the two-sided width portion 23 when the butterfly valve 30 is fully opened.
The downstream chamfered portion 28 includes a first chamfered portion 28a formed on a downstream side of the flat surface 23a on one side of the two-sided width portion 23, and a second chamfered portion 28b formed on a downstream side of the flat surface 23b on the other side of the two-sided width portion 23.

As shown in FIGS. 7 and 8, the first chamfered portion 28a is formed as a flat surface that inclines downward on the downstream side starting from the countersink outer edge 25a₁ so as not to enter the countersink female screw hole 25.
The second chamfered portion 28b is formed symmetrically with the first chamfered portion 28a with respect to a plane including the central surface of the slit hole 24 and the axis S.

The downstream curved chamfered portion 28r serves to suppress a step to make the fluid flow streamlined in the surface region where the two-sided width portion 23 of the shaft 20 and the butterfly valve 30 are close to each other, that is, in a downstream region of the concave curved portion 26 when the butterfly valve 30 is fully opened.
The downstream curved chamfered portion 28r includes a first curved chamfered portion 28ra formed on a downstream side of the first curved portion 26a, and a second curved chamfered portion 28rb formed on a downstream side of the second curved portion 26b. The first curved chamfered portion 28ra is formed as a concave curved surface continuous with the first chamfered portion 28a and the first curved portion 26a.
The second curved chamfered portion 28rb is formed as a concave curved surface continuous with the second chamfered portion 28b and the second curved portion 26b.

In the first embodiment, as shown in FIGS. 7 and 8, an angle formed by the first chamfered portion 27a and the flat surface 23a of the two-sided width portion 23 and an angle formed by the second chamfered portion 27b and the flat surface 23b of the two-sided width portion 23, that is, an angle formed by the upstream chamfered portion 27 and the two-sided width portion 23 is represented by α.
In addition, an angle formed by the first chamfered portion 28a and the flat surface 23a of the two-sided width portion 23 and an angle formed by the second chamfered portion 28b and the flat surface 23b of the two-sided width portion 23, that is, an angle formed by the downstream chamfered portion 28 and the two-sided width portion 23 is represented by β.
Here, a relationship between the angle α and the angle β is set to satisfy angle α = angle β.

In this way, by setting the angle α and the angle β to the same value, when a columnar metal material is processed to manufacture the shaft 20, the upstream chamfered portion 27 and the downstream chamfered portion 28 can be formed by cutting at the same inclination angle after the two-sided width portion 23 is formed by cutting, and a setup and a processing cost of the cutting can be reduced.

As shown in FIGS. 4 to 6, the butterfly valve 30 is made of a metal material or the like and formed into a substantially disk shape with a plate thickness dimension that allows the butterfly valve 30 to be fitted into the slit hole 24 without rattling, and includes two through holes 31 through which the fastening screw 40 is passed.
That is, the plate thickness of the butterfly valve 30 is equal to or slightly smaller than the width dimension W2 of the slit hole 24, and is set in a range of 0.3 × W1 to 0.5 × W1.
By setting such a plate thickness, the mechanical strength of the butterfly valve 30 can be ensured, and the passage area of the fluid flowing through the passage 13 can be increased when the butterfly valve 30 is fully opened.
The butterfly valve 30 is arranged in a manner that after the shaft 20 is passed through the bearing hole 14 of the body 10, the butterfly valve 30 is fitted into the slit hole 24 and fixed to the shaft 20 by the fastening screw 40 in the passage 13 so as to open and close the passage 13.
Besides, the butterfly valve 30 opens the passage 13 to a desired opening degree according to a rotation of the shaft 20.

The fastening screw 40 is a round countersunk screw or a countersunk screw made of a metal material, and here, a round countersunk screw having a convex curved surface is adopted. Moreover, from a viewpoint of reducing the flow resistance of the fluid, a countersunk screw having a flat surface may be adopted.

The urging spring 50 is a compression type coil spring. As shown in FIG. 3, the urging spring 50 is arranged in the accommodating recess 15 of the body 10, sandwiched by a first spring receiving member 61 and a second spring receiving member 62, and urges the shaft 20 on one side in the axis S direction. Thereby, the rattling of the shaft 20 in the axis S direction is prevented.

As shown in FIG. 3, the spring receiving member 60 includes the first spring receiving member 61 adjacent to the bearing B and the second spring receiving member 62 adjacent to the retaining ring 70.
The first spring receiving member 61 is slidably fitted into the small-diameter columnar portion 21b of the shaft 20 to receive one end portion of the urging spring 50.
The second spring receiving member 62 is slidably fitted into the small-diameter columnar portion 21b of the shaft 20 to receive the other end portion of the urging spring 50.

The retaining ring 70 is a C-shaped snap ring. After the first spring receiving member 61, the urging spring 50, and the second spring receiving member 62 are fitted into the small-diameter columnar portion 21b of the shaft 20, the retaining ring 70 is fitted into the annular groove 21c of the shaft 20, and restricts an outward movement of the second spring receiving member 62 in the axis S direction.

The cap 80 is attached after the shaft 20 and the butterfly valve 30 are attached to the body 10 and the rotation angle position of the shaft 20 is inspected, covers one end portion 21 of the shaft 20, the urging spring 50, and the spring receiving member 60, and closes a passage communicating from the passage 13 to the bearing hole 14.

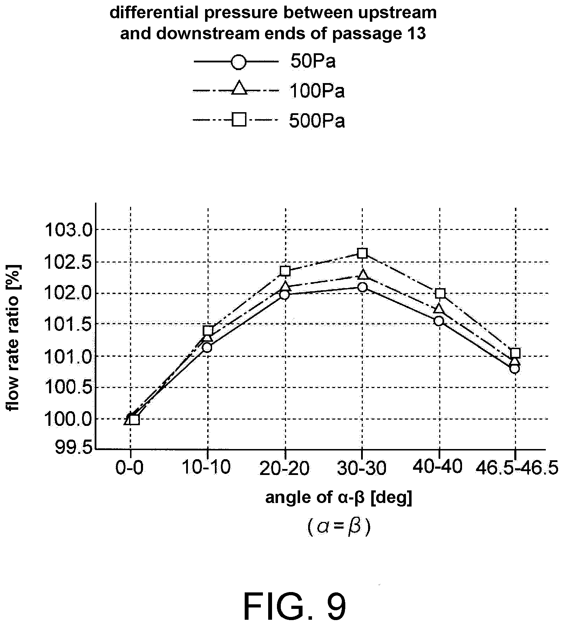

In the above butterfly valve device, regarding values of the angle α related to the upstream chamfered portion 27 and the angle β related to the downstream chamfered portion 28, the angle α and the angle β are set in a range of 10° to 46.5°.
By setting the angle α and the angle β in the above range, as shown in FIG. 9, as compared with a case where the upstream chamfered portion 27 and the downstream chamfered portion 28 are not arranged (angles α and β = 0°), the flow resistance can be reduced, and as a result, the flow rate of the fluid can be increased. Particularly, the flow rate can be increased in a region where a differential pressure between the upstream side and the downstream side of the passage 13 becomes large, that is, a flow velocity when the butterfly valve 30 is fully opened becomes high

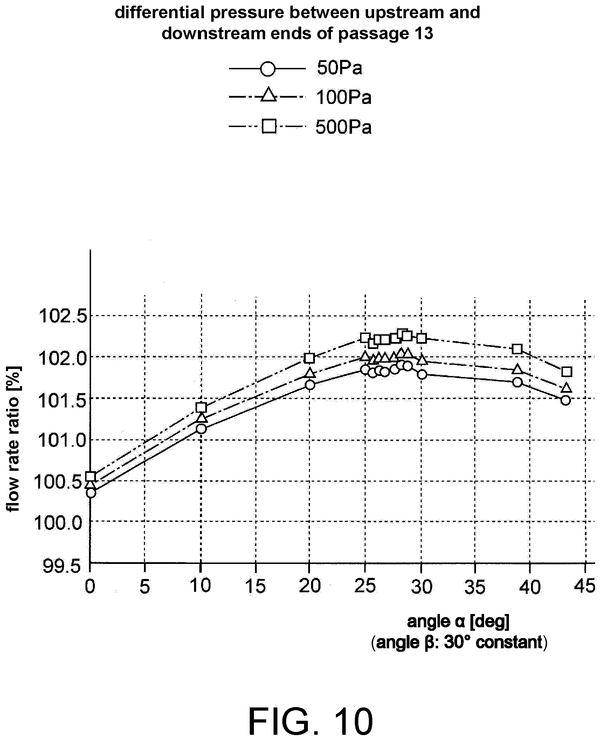

In addition, when the angle β is kept constant (30°) and the angle α is changed, as shown in FIG. 10, the flow rate increases most in a region where the angle α is 25° to 30°.
As described above, referring to the results shown in FIGS. 9 and 10, the angles α and angle β are set in a range of 10° to 46.5°, preferably in a range of 20° to 30°, and further preferably in a range of 25° to 30°.

As for assembly work of the shaft 20 and the butterfly valve 30 in the butterfly valve device M, first, the shaft 20 is inserted into the bearing hole 14 of the body 10.
Subsequently, the bearing B is fitted into the large-diameter hole 14b of the body 10 and the columnar portions 21a and 22a of the shaft 20. Subsequently, the shaft 20 is held at an angle position where the slit hole 24 of the shaft 20 is oriented along the axis L direction, and the butterfly valve 30 is brought closer from the upstream side or the downstream side of the passage 13 to be fitted into the slit hole 24.
Subsequently, the shaft 20 is rotated and held so that the butterfly valve 30 is closed, a tightening tool is inserted into the passage 13, and the fastening screw 40 is screwed through the countersink female screw hole 25 and the through hole 31.
Thereby, the butterfly valve 30 is fixed to the shaft 20.
In this way, the shaft 20 and the butterfly valve 30 can be assembled to the body 10 with a simple setup, and thus facilitation of the assembling work can be achieved as a whole.

As described above, in the butterfly valve device M according to the first embodiment, in the surface region where the two-sided width portion 23 of the shaft 20 and the butterfly valve 30 are close to each other, the upstream chamfered portion 27 and the downstream chamfered portion 28, and the upstream curved chamfered portion 27r and the downstream curved chamfered portion 28r are included as the step suppressing portions that suppress a step so as to make the fluid flow streamlined when the butterfly valve 30 is fully opened.
Thereby, it is possible to simplify the structure, and reduce the flow resistance of the fluid to increase of the flow rate through the passage 13, particularly to increase the flow rate when the butterfly valve 30 is fully opened with a large differential pressure, as shown in FIGS. 9 and 10.

In addition, because the shaft 20 has the countersink female screw hole 25 through which the fastening screw 40 is screwed in the region of the two-sided width portion 23, and the butterfly valve 30 has the through hole 31 through which the fastening screw 40 is passed when the butterfly valve 30 is fitted into the slit hole 24 of the shaft 20, the step suppressing portions can be adopted and facilitation of the assembling work can be achieved.

In addition, the relationship between the angle α formed by the upstream chamfered portion 27 and the two-sided width portion 23 and the angle β formed by the downstream chamfered portion 28 and the two-sided width portion 23 is set to satisfy angle α = angle β. Therefore, when a columnar metal material is processed to manufacture the shaft 20, by forming the two-sided width portion 23 by cutting and forming the upstream chamfered portion 27 and the downstream chamfered portion 28 by cutting at the same inclination angle, a setup and a processing cost of the cutting can be reduced.
Here, by setting the angle α and the angle β in a range of 10° to 46.5°, the flow rate of the fluid flowing through the passage 13 can be reliably increased.

In addition, the upstream chamfered portion 27 is formed in a manner of being inclined downward on the upstream side starting from the countersink outer edge 25a₁ of the countersink female screw hole 25, and the downstream chamfered portion 28 is formed in a manner of being inclined downward on the downstream side starting from the countersink outer edge 25a₁ of the countersink female screw hole 25. Therefore, a seating surface of the fastening screw 40 can be secured, a chamfered region can be increased, and a step in the surface region where the two-sided width portion 23 and the butterfly valve 30 are close to each other can be suppressed efficiently.

Furthermore, when the outer diameter of the shaft 20 is D and the width dimension of the two-sided width portion 23 in the outer diameter direction of the shaft 20 is W1, the width dimension W1 is set in a range of 0.4 × D to 0.7 × D.
Thereby, the mechanical strength is ensured and protrusion of a member that obstructs the fluid flow is reduced in the passage 13, so that the step in the surface region where the two-sided width portion 23 of the shaft 20 and the butterfly valve 30 are close to each other can be suppressed efficiently, and the fluid flow can be streamlined when the butterfly valve 30 is fully opened. Thereby, a substantial passage area in the passage 13 can be increased to increase the flow rate.

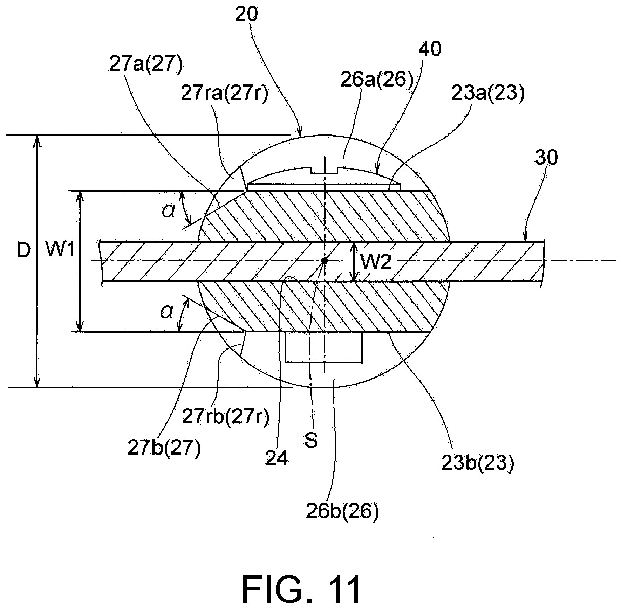

FIG. 11 shows a second embodiment of the butterfly valve device according to the disclosure, and the same configurations as those in the first embodiment described above are designated by the same reference signs and the descriptions thereof are omitted. In the second embodiment, only the upstream chamfered portion 27 and the upstream curved chamfered portion 27r formed on the shaft 20 are included as the step suppressing portions in the upstream region of the two-sided width portion 23 when the butterfly valve 30 is fully opened.
In the second embodiment, the angle α formed by the upstream chamfered portion 27 and the two-sided width portion 23 is set in a range of 10° to 46.5°.

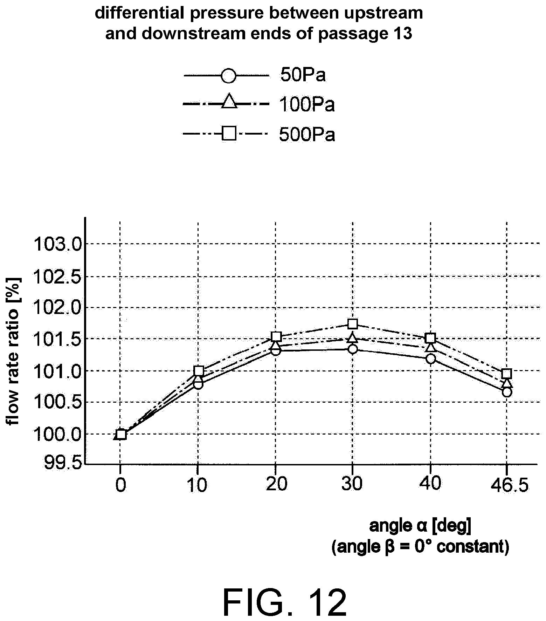

FIG. 12 is a graph showing a change in the flow rate when the angle α is changed in a case where only the upstream chamfered portion 27 (and the upstream curved chamfered portion 27r) is arranged.
As is clear from the result, by setting the angle α in a range of 10° to 46.5°, the flow resistance can be reduced as compared with a case where the upstream chamfered portion 27 is not arranged (angle α = 0°), and as a result, the flow rate of the fluid can be increased. Particularly, in FIG. 12, increase of the flow rate can be achieved when the butterfly valve 30 is fully opened with a large differential pressure so that a difference occurs at differential pressures of 50 pa, 100 pa, and 500 pa.

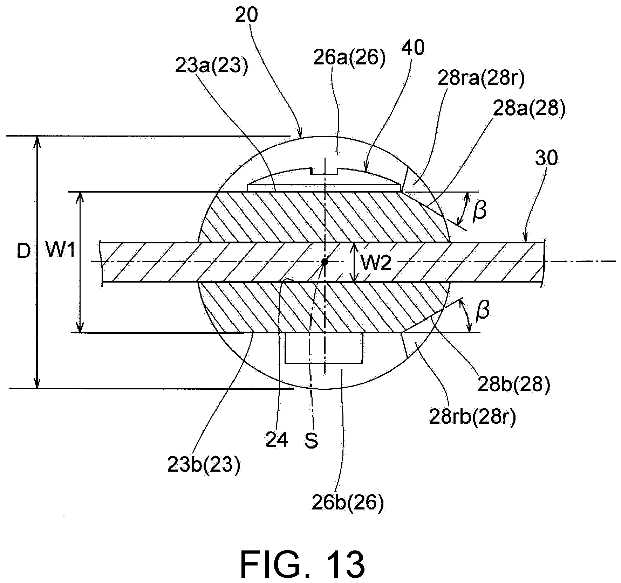

FIG. 13 shows a third embodiment of the butterfly valve device according to the disclosure, and the same configurations as those in the first embodiment described above are designated by the same reference signs and the descriptions thereof are omitted. In the third embodiment, only the downstream chamfered portion 28 and the downstream curved chamfered portion 28r formed on the shaft 20 are included as the step suppressing portions in the downstream region of the two-sided width portion 23 when the butterfly valve 30 is fully opened.
In the third embodiment, the angle β formed by the downstream chamfered portion 28 and the two-sided width portion 23 is set in a range of 10° to 40°.

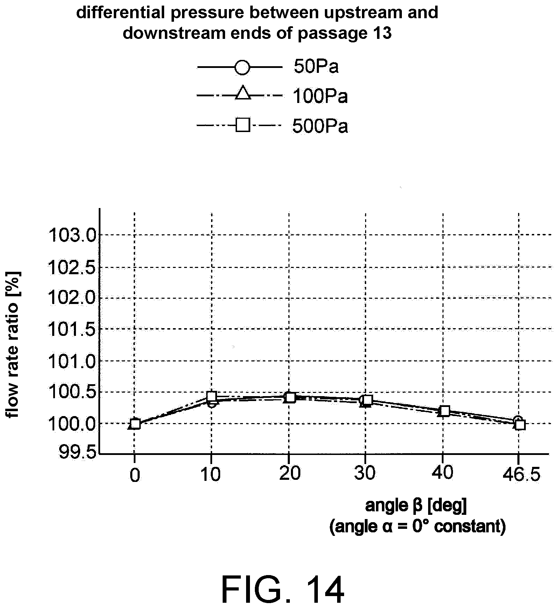

FIG. 14 is a graph showing a change in the flow rate when the angle β is changed in a case where only the downstream chamfered portion 28 (and the downstream curved chamfered portion 28r) is arranged.
As is clear from the result, by setting the angle β in a range of 10° to 40°, the flow resistance can be reduced as compared with a case where the downstream chamfered portion 28 is not arranged (angle β = 0°), and as a result, the flow rate of the fluid can be increased.

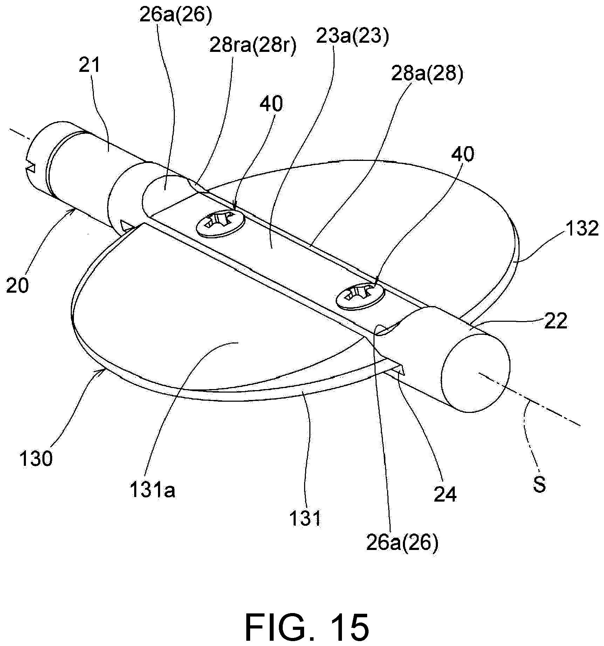

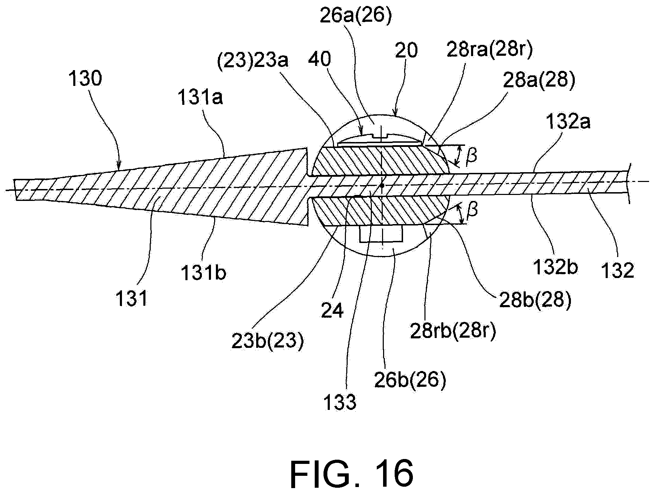

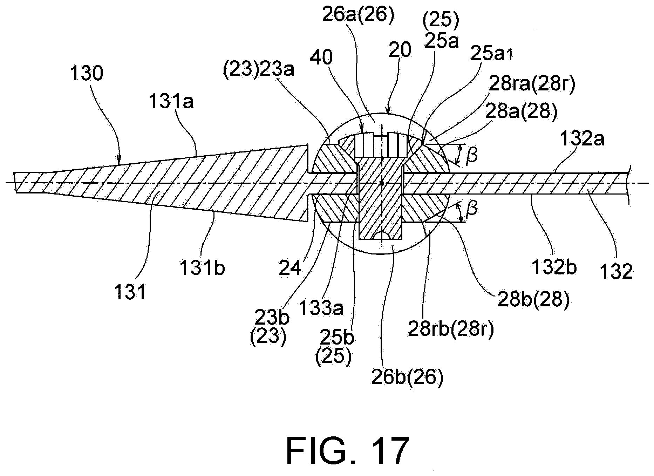

FIGS. 15 to 17 show a fourth embodiment of the butterfly valve device according to the disclosure, and the same configurations as those in the first embodiment described above are designated by the same reference signs and the descriptions thereof are omitted.
In the fourth embodiment, the shaft 20 includes one end portion 21, the other end portion 22, the two-sided width portion 23, the slit hole 24, the two countersink female screw holes 25, the concave curved portion 26, and the downstream chamfered portion 28 and the downstream curved chamfered portion 28r serving as the step suppressing portions.

A butterfly valve 130 is formed in a manner of being inserted into the slit hole 24 from the upstream side of the passage 13 with respect to the shaft 20 assembled in the bearing hole 14 of the body 10.
That is, when the butterfly valve 130 is fully opened, the butterfly valve 130 includes an upstream half body 131 located on the upstream side of the passage 13, a downstream half body 132 located on the downstream side of the passage 13, and a fitting portion 133 that is fitted into the slit hole 24.

The upstream half body 131 includes a first tapered surface 131a and a second tapered surface 131b serving as an upstream tapered surface whose plate thickness increases from the upstream side toward the two-sided width portion 23 when the butterfly valve 130 is fully opened.
The first tapered surface 131a is formed as an inclined surface extending toward an edge portion of the flat surface 23a, on the same side as the flat surface 23a on one side of the two-sided width portion 23.
The second tapered surface 131b is formed as an inclined surface extending toward an edge portion of the flat surface 23b, on the same side as the flat surface 23b on the other side of the two-sided width portion 23.
The downstream half body 132 has a constant plate thickness equal to or slightly smaller than the width dimension W2 of the slit hole 24, and includes a first plane 132a formed on the same side as the flat surface 23a on one side of the two-sided width portion 23 and a second plane 132b formed on the same side as the flat surface 23b on the other side of the two-sided width portion 23.
The fitting portion 133 is formed to have the same plate thickness as the downstream half body 132, and has two through holes 133a through which the fastening screw 40 is passed when the butterfly valve 130 is fitted into the slit hole 24.

In the fourth embodiment, the assembling work of the shaft 20 and the butterfly valve 130 is performed in the same manner as in the first embodiment described above. After the bearing hole 14 of the body 10 and the shaft 20 are assembled, the shaft 20 is held at an angle position where the slit hole 24 of the shaft 20 is oriented along the axis L direction, and the butterfly valve 130 is brought closer from the upstream side of the passage 13 to be fitted into the slit hole 24.
Subsequently, the shaft 20 is rotated and held so that the butterfly valve 130 is closed, a tightening tool is inserted into the passage 13, and the fastening screw 40 is screwed through the countersink female screw hole 25 and the through hole 133a.
Thereby, the butterfly valve 130 is fixed to the shaft 20.
In this way, the shaft 20 and the butterfly valve 130 can be assembled to the body 10 with a simple setup, and thus facilitation of the assembling work can be achieved as a whole.

As described above, in the butterfly valve device M according to the fourth embodiment, in a surface region where the two-sided width portion 23 of the shaft 20 and the butterfly valve 130 are close to each other, the upstream tapered surface (the first tapered surface 131a and the second tapered surface 131b), the downstream chamfered portion 28, and the downstream curved chamfered portion 28r are included as the step suppressing portions that suppress a step so as to make the fluid flow streamlined when the butterfly valve 130 is fully opened.
In addition, the angle β related to the downstream chamfered portion 28 is selected from a range of numerical values shown in the embodiments described above.
Thereby, it is possible to simplify the structure, and reduce the flow resistance of the fluid to increase the flow rate through the passage 13, particularly to increase the flow rate when the butterfly valve 130 is fully opened with a large differential pressure. In addition, as in the embodiments described above, simplification of the structure, facilitation of the assembling work, and the like can be achieved.

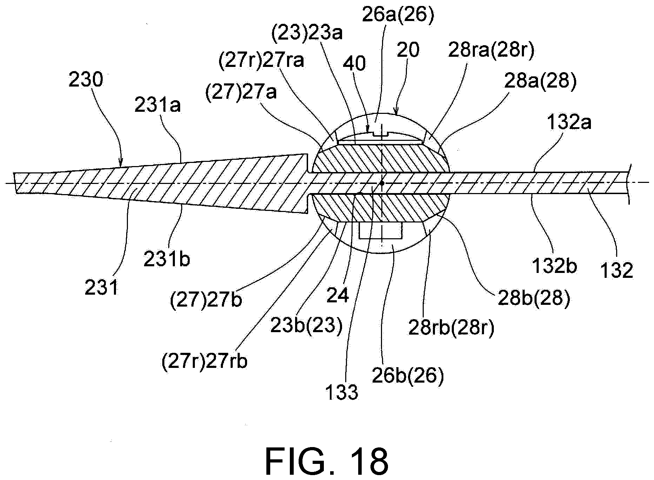

FIG. 18 shows a fifth embodiment serving as a variation example of the fourth embodiment, and the same configurations as those in the first embodiment and the fourth embodiment described above are designated by the same reference signs and the descriptions thereof are omitted.
In the fifth embodiment, the shaft 20 includes one end portion 21, the other end portion 22, the two-sided width portion 23, the slit hole 24, the two countersink female screw holes 25, the concave curved portion 26, and the step suppressing portions, that is, the upstream chamfered portion 27, the downstream chamfered portion 28, the upstream curved chamfered portion 27r, and the downstream curved chamfered portion 28r.

When a butterfly valve 230 is fully opened, the butterfly valve 230 includes an upstream half body 231 located on the upstream side of the passage 13, the downstream half body 132 located on the downstream side of the passage 13, and the fitting portion 133 that is fitted into the slit hole 24.
The upstream half body 231 includes a first tapered surface 231a and a second tapered surface 231b serving as an upstream tapered surface whose a plate thickness increases from the upstream side toward the two-sided width portion 23 when the butterfly valve 230 is fully opened.
The first tapered surface 231a is formed as an inclined surface extending toward an edge portion of the first chamfered portion 27a formed on the upstream side of the two-sided width portion 23, on the same side as the flat surface 23a on one side of the two-sided width portion 23.
The second tapered surface 231b is formed as an inclined surface extending toward an edge portion of the second chamfered portion 27b formed on the upstream side of the two-sided width portion 23, on the same side as the flat surface 23b on the other side of the two-sided width portion 23.

As described above, in the butterfly valve device M according to the fifth embodiment, in a surface region where the two-sided width portion 23 of the shaft 20 and the butterfly valve 230 are close to each other, the upstream tapered surface (the first tapered surface 231a and the second tapered surface 231b), the upstream chamfered portion 27 and the downstream chamfered portion 28, and the upstream curved chamfered portion 27r and the downstream curved chamfered portion 28r are included as the step suppressing portions that suppress a step so as to make the fluid flow streamlined when the butterfly valve 230 is fully opened.
In addition, the angle α related to the upstream chamfered portion 27 and the angle β related to the downstream chamfered portion 28 are selected from a range of numerical values shown in the embodiments described above.
Thereby, it is possible to simplify the structure, and reduce the flow resistance of the fluid to increase of the flow rate through the passage 13, particularly to increase the flow rate when the butterfly valve 230 is fully opened with a large differential pressure. In addition, as in the embodiments described above, simplification of the structure, facilitation of the assembling work, and the like can be achieved.
Particularly, compared with the fourth embodiment described above, the plate thickness on the upstream side of the butterfly valve 230 becomes thinner, and thus the substantial passage area in the passage 13 is increased accordingly, and the flow resistance of the fluid can be further reduced.

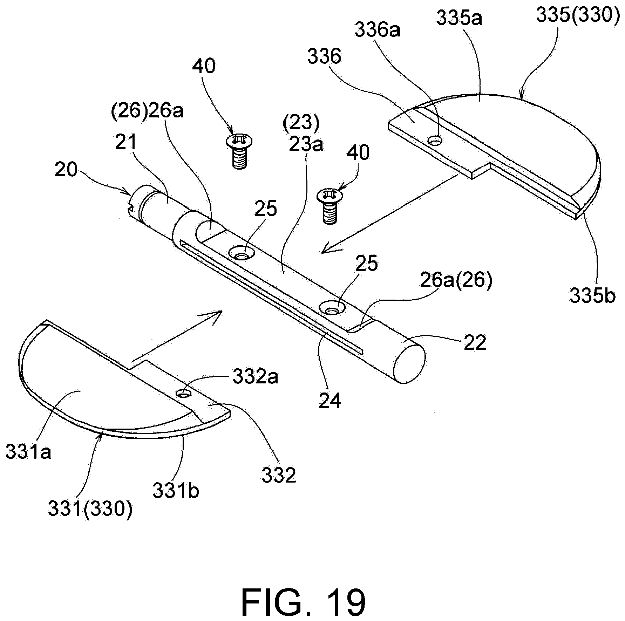

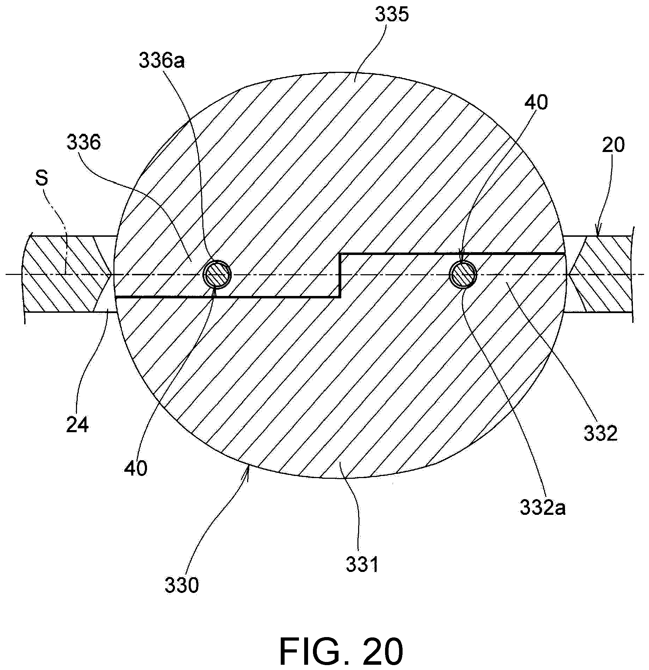

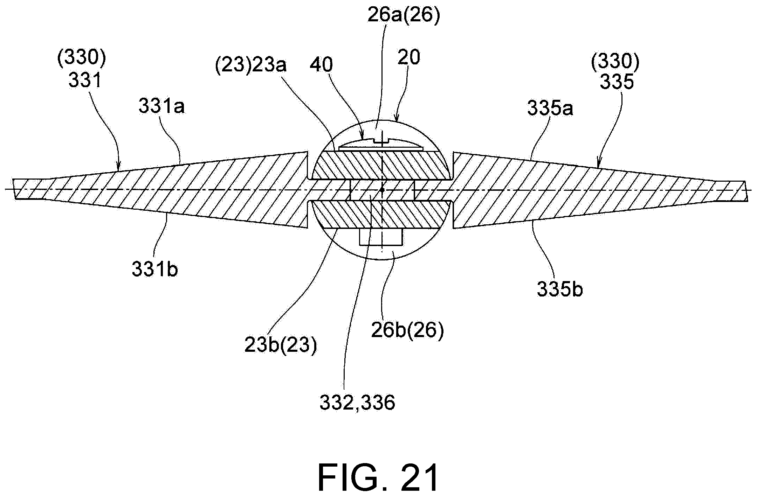

FIGS. 19 to 21 show a sixth embodiment of the butterfly valve device according to the disclosure, and the same configurations as those in the first embodiment described above are designated by the same reference signs and the descriptions thereof are omitted.
In the sixth embodiment, the shaft 20 includes one end portion 21, the other end portion 22, the two-sided width portion 23, the slit hole 24, the two countersink female screw holes 25, and the concave curved portion 26.

A butterfly valve 330 is formed in two parts, including an upstream valve 331 that is inserted into the slit hole 24 from the upstream side of the passage 13 and a downstream valve 335 that is inserted into the slit hole 24 from the downstream side of the passage 13 with respect to the shaft 20 assembled in the bearing hole 14 of the body 10.

The upstream valve 331 includes a first tapered surface 331a and a second tapered surface 331b serving as an upstream tapered surface whose plate thickness increases from the upstream side toward the two-sided width portion 23 when the butterfly valve 330 is fully opened, and a fitting portion 332 that is fitted into the slit hole 24.
The first tapered surface 331a is formed as an inclined surface extending toward an edge portion of the flat surface 23a, on the same side as the flat surface 23a on one side of the two-sided width portion 23.
The second tapered surface 331b is formed as an inclined surface extending toward an edge portion of the flat surface 23b, on the same side as the flat surface 23b on the other side of the two-sided width portion 23.
The fitting portion 332 is formed to have a constant plate thickness equal to or slightly smaller than the width dimension W2 of the slit hole 24, in a shape to be fitted over a length of about half of the slit hole 24 in the axis S direction, and has one through hole 332a through which the fastening screw 40 is passed.

The downstream valve 335 includes a first tapered surface 335a and a second tapered surface 335b serving as a downstream tapered surface whose plate thickness increases from the downstream side toward the two-sided width portion 23 when the butterfly valve 330 is fully opened, and a fitting portion 336 that is fitted into the slit hole 24.
The first tapered surface 335a is formed as an inclined surface extending toward an edge portion of the flat surface 23a, on the same side as the flat surface 23a on one side of the two-sided width portion 23.
The second tapered surface 335b is formed as an inclined surface extending toward an edge portion of the flat surface 23b, on the same side as the flat surface 23b on the other side of the two-sided width portion 23.
The fitting portion 336 is formed to have a constant plate thickness equal to or slightly smaller than the width dimension W2 of the slit hole 24, in a shape to be fitted over a length of about half of the slit hole 24 in the axis S direction, and has one through hole 336a through which the fastening screw 40 is passed.

In the embodiment, the upstream valve 331 and the downstream valve 335 are formed in the same shape except that outer peripheral surfaces are processed to have different inclinations. Thus, although the butterfly valve 330 has a two-divided structure including the upstream valve 331 and the downstream valve 335, the butterfly valve 330 is a single component type. Therefore, although the two-divided structure is adopted, the increase in cost can be suppressed.

In the sixth embodiment, the assembling work of the shaft 20 and the butterfly valve 330 is performed in the same manner as in the first embodiment described above. After the bearing hole 14 of the body 10 and the shaft 20 are assembled, the shaft 20 is held at an angle position where the slit hole 24 of the shaft 20 is oriented along the axis L direction, the upstream valve 331 is brought closer from the upstream side of the passage 13 to be fitted into the slit hole 24, and the downstream valve 335 is brought closer from the downstream side of the passage 13 to be fitted into the slit hole 24.
Subsequently, the shaft 20 is rotated and held so that the butterfly valve 330 is closed, a tightening tool is inserted into the passage 13, and the fastening screw 40 is screwed through the countersink female screw hole 25 and the through holes 332a and 336a.
Thereby, the upstream valve 331 and the downstream valve 335 are fixed to the shaft 20. In this way, the shaft 20 and the butterfly valve 330 can be assembled to the body 10 with a simple setup, and thus facilitation of the assembling work can be achieved as a whole.

As described above, in the butterfly valve device M according to the sixth embodiment, in a surface region where the two-sided width portion 23 of the shaft 20 and the butterfly valve 330 are close to each other, the upstream tapered surface (the first tapered surface 331a and the second tapered surface 331b) and the downstream tapered surface (the first tapered surface 335a and the second tapered surface 335b) are included as the step suppressing portions that suppress a step so as to make the fluid flow streamlined when the butterfly valve 330 is fully opened.
Thereby, it is possible to simplify the structure, and reduce the flow resistance of the fluid to increase of the flow rate through the passage 13, particularly to increase the flow rate when the butterfly valve 330 is fully opened with a large differential pressure. In addition, as in the embodiments described above, simplification of the structure, facilitation of the assembling work, and the like can be achieved.

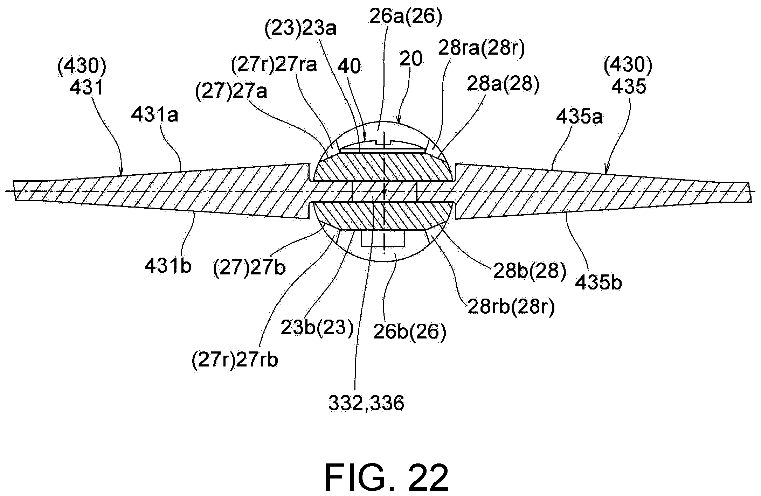

FIG. 22 shows a seventh embodiment serving as a variation example of the sixth embodiment, and the same configurations as those in the first embodiment and the sixth embodiment described above are designated by the same reference signs and the descriptions thereof are omitted.
In the seventh embodiment, the shaft 20 includes one end portion 21, the other end portion 22, the two-sided width portion 23, the slit hole 24, the two countersink female screw holes 25, the concave curved portion 26, and the step suppressing portions, that is, the upstream chamfered portion 27, the downstream chamfered portion 28, the upstream curved chamfered portion 27r, and the downstream curved chamfered portion 28r.

A butterfly valve 430 is formed in two parts, including an upstream valve 431 that is inserted into the slit hole 24 from the upstream side of the passage 13 and a downstream valve 435 that is inserted into the slit hole 24 from the downstream side of the passage 13 with respect to the shaft 20 assembled in the bearing hole 14 of the body 10.

The upstream valve 431 includes a first tapered surface 431a and a second tapered surface 431b serving as an upstream tapered surface whose plate thickness increases from the upstream side toward the two-sided width portion 23 when the butterfly valve 430 is fully opened, and the fitting portion 332.
The first tapered surface 431a is formed as an inclined surface extending toward an edge portion of the first chamfered portion 27a, on the same side as the flat surface 23a on one side of the two-sided width portion 23.
The second tapered surface 431b is formed as an inclined surface extending toward an edge portion of the second chamfered portion 27b, on the same side as the flat surface 23b on the other side of the two-sided width portion 23.

The downstream valve 435 includes a first tapered surface 435a and a second tapered surface 435b serving as a downstream tapered surface whose plate thickness increases from the downstream side toward the two-sided width portion 23 when the butterfly valve 430 is fully opened, and the fitting portion 336.
The first tapered surface 435a is formed as an inclined surface extending toward an edge portion of the first chamfered portion 28a, on the same side as the flat surface 23a on one side of the two-sided width portion 23.
The second tapered surface 435b is formed as an inclined surface extending toward an edge portion of the second chamfered portion 28b, on the same side as the flat surface 23b on the other side of the two-sided width portion 23.

As described above, in the butterfly valve device M according to the seventh embodiment, in a surface region where the two-sided width portion 23 of the shaft 20 and the butterfly valve 430 are close to each other, the upstream tapered surface (the first tapered surface 431a and the second tapered surface 431b), the downstream tapered surface (the first tapered surface 435a and the second tapered surface 435b), the upstream chamfered portion 27 and the downstream chamfered portion 28, and the upstream curved chamfered portion 27r and the downstream curved chamfered portion 28r are included as the step suppressing portions that suppress a step so as to make the fluid flow streamlined when the butterfly valve 430 is fully opened.
In addition, the angle α related to the upstream chamfered portion 27 and the angle β related to the downstream chamfered portion 28 are selected from a range of numerical values shown in the embodiments described above.
Thereby, it is possible to simplify the structure, and reduce the flow resistance of the fluid to increase of the flow rate through the passage 13, particularly to increase the flow rate when the butterfly valve 430 is fully opened with a large differential pressure. In addition, as in the embodiments described above, simplification of the structure, facilitation of the assembling work, and the like can be achieved.
Particularly, compared with the sixth embodiment described above, the plate thickness on the upstream side and the downstream side of the butterfly valve 430 becomes thinner, and thus the substantial passage area in the passage 13 is increased accordingly, and the flow resistance of the fluid can be further reduced.

In the above embodiments, in the surface region where the two-sided width portion of the shaft and the butterfly valve are close to each other, the upstream chamfered portion 27, the downstream chamfered portion 28, the upstream curved chamfered portion 27r, and the downstream curved chamfered portion 28r formed on the shaft 20 by processing, and the upstream tapered surfaces (131a, 131b, 231a, 231b, 331a, 331b, 431a and 431b) and the downstream tapered surfaces (335a, 335b, 435a and 435b) formed on the butterfly valves 130, 230, 330 and 430 by processing have been shown as the step suppressing portions that suppress a step so as to make the fluid flow streamlined when the butterfly valve is fully opened. However, other forms may be adopted for any step suppressing portion that is formed on the shaft or the butterfly valve by processing or molding.

In the above embodiments, a form in which the upstream chamfered portion 27 and the downstream chamfered portion 28 serving as the step suppressing portions are flat surfaces inclined at the angles α and β with respect to the two-sided width portion 23 has been shown, but the disclosure is not limited thereto, and the upstream chamfered portion and the downstream chamfered portion may be formed as curved surfaces that are curved in a convex shape.

In the above embodiments, a case where the fastening screw 40 is used for fixing the butterfly valve to the shaft has been shown, but the disclosure is not limited thereto, and other methods may be adopted as long as the assembly can be easily performed.

In the above embodiments, a case where the concave curved portions 26 are arranged on both sides of the two-sided width portion 23 in the shaft has been shown, but the disclosure is not limited thereto. As long as the mechanical strength of the shaft can be ensured and the flow resistance of the fluid can be reduced, the concave curved portion 26 may be abolished and the two-sided width portion may be adopted in an entire region facing the passage 13.

In the above embodiments, the passage 13 that is cylindrical and has a circular cross section has been shown as the passage through which the fluid flows, but the disclosure is not limited thereto. A tubular passage having an elliptical cross section or an oval cross section may be adopted, and the passage may be opened and closed by a butterfly valve.

In the above embodiments, the throttle device in which one passage 13 is opened and closed by one butterfly valve 30, 130, 230, 330 or 430 has been shown as the butterfly valve device of the disclosure, but the disclosure is not limited thereto. A multiple throttle device including a plurality of butterfly valves, in which a plurality of passages are arranged in parallel and each passage is opened and closed by a butterfly valve, may be applied.

As described above, the butterfly valve device of the disclosure can achieve simplification of the structure, facilitation of the assembling work, reduction of the flow resistance of the fluid, increase of the flow rate when the butterfly valve is fully opened, and the like. Therefore, obviously, the butterfly valve device of the disclosure can be applied as a throttle device of a motorcycle for which miniaturization and cost reduction are required, and is also useful as a butterfly valve device that adjusts a flow rate of exhaust gas, or a butterfly valve device that adjusts a flow rate of a fluid in other vehicles.

### [Reference Signs List]

S axis
10 body
13 passage
14 bearing hole
20 shaft
23 two-sided width portion
24 slit hole
25 countersink female screw hole
25a₁ countersink outer edge
26 concave curved portion
27 upstream chamfered portion (step suppressing portion)
27a first chamfered portion (upstream chamfered portion)
27b second chamfered portion (upstream chamfered portion)
27r upstream curved chamfered portion (step suppressing portion)
27ra first curved chamfered portion (upstream curved chamfered portion)
27rb second curved chamfered portion (upstream curved chamfered portion)
28 downstream chamfered portion (step suppressing portion)
28a first chamfered portion (downstream chamfered portion)
28b second chamfered portion (downstream chamfered portion)
28r downstream curved chamfered portion (step suppressing portion)
28ra first curved chamfered portion (downstream curved chamfered portion)
28rb second curved chamfered portion (downstream curved chamfered portion)
30 butterfly valve
31 through hole
40 fastening screw
130 butterfly valve
131a first tapered surface (upstream tapered surface, step suppressing portion)
131b second tapered surface (upstream tapered surface, step suppressing portion)
133a through hole
230 butterfly valve
231a first tapered surface (upstream tapered surface, step suppressing portion)
231b second tapered surface (upstream tapered surface, step suppressing portion)
330, 430 butterfly valve
331, 431 upstream valve
331a, 431a first tapered surface (upstream tapered surface, step suppressing portion)
331b, 431b second tapered surface (upstream tapered surface, step suppressing portion)
332a, 336a through hole
335, 435 downstream valve
335a, 435a first tapered surface (downstream tapered surface, step suppressing portion)
335b, 435b second tapered surface (downstream tapered surface, step suppressing portion)

## Claims

1. A butterfly valve device (M), comprising:
a body (10) that defines a passage (13) through which a fluid flows and a bearing hole (14) arranged on a predetermined axis (S);
a shaft (20) that is rotatably passed through the bearing hole (14), has a two-sided width portion (23) formed in a region facing the passage (13) and a slit hole (24) penetrating a center of the two-sided width portion (23), and has a columnar outer contour; and
a butterfly valve (30) that is fitted into the slit hole (24) and fixed to the shaft (20) to open and close the passage (13);
wherein in a surface region where the two-sided width portion (23) of the shaft (20) and the butterfly valve (30) are close to each other, the butterfly valve device has a step suppressing portion (27, 28) that suppresses a step so as to make the fluid flow streamlined when the butterfly valve (30) is fully opened.

2. The butterfly valve device (M) according to claim 1, wherein
the shaft (20) has a countersink female screw hole (25) through which a fastening screw (40) is screwed in a region of the two-sided width portion (23); and
the butterfly valve (30) has a through hole (31) through which the fastening screw (40) is passed when the butterfly valve (30) is fitted in the slit hole (24).

3. The butterfly valve device (M) according to claim 2, wherein
the step suppressing portion (27, 28) comprises an upstream chamfered portion (27) formed on the shaft (20) in an upstream region of the two-sided width portion (23) when the butterfly valve (30) is fully opened.

4. The butterfly valve device (M) according to claim 3, wherein
the upstream chamfered portion (27) is formed in a manner of being inclined downward on an upstream side starting from a countersink outer edge of the countersink female screw hole (25).

5. The butterfly valve device (M) according to claim 3 or 4, wherein
the shaft (20) comprises a concave curved portion (26) continuous from the two-sided width portion (23) to the outer contour in a region facing the passage (13) on both sides of the two-sided width portion (23) in an axis direction; and
the step suppressing portion (27, 28) comprises an upstream curved chamfered portion (27r) formed on the shaft (20) in an upstream region of the concave curved portion (26) when the butterfly valve (30) is fully opened.

6. The butterfly valve device (M) according to claim 2, wherein
the step suppressing portion (27, 28) comprises a downstream chamfered portion (28) formed on the shaft (20) in a downstream region of the two-sided width portion (23) when the butterfly valve (30) is fully opened.

7. The butterfly valve device (M) according to claim 6, wherein
the downstream chamfered portion (28) is formed in a manner of being inclined downward on a downstream side starting from a countersink outer edge of the countersink female screw hole (25).

8. The butterfly valve device (M) according to claim 6 or 7, wherein
the shaft (20) comprises a concave curved portion (26) continuous from the two-sided width portion (23) to the outer contour in a region facing the passage (13) on both sides of the two-sided width portion (23) in an axis direction; and
the step suppressing portion (27, 28) comprises a downstream curved chamfered portion (28r) formed on the shaft (20) in a downstream region of the concave curved portion (26) when the butterfly valve (30) is fully opened.

9. The butterfly valve device (M) according to claim 2, wherein
the step suppressing portion (27, 28) comprises an upstream chamfered portion (27) formed on the shaft (20) in an upstream region of the two-sided width portion (23) when the butterfly valve (30) is fully opened, and a downstream chamfered portion (28) formed on the shaft (20) in a downstream region of the two-sided width portion (23) when the butterfly valve (30) is fully opened.

10. The butterfly valve device (M) according to claim 9, wherein
the upstream chamfered portion (27) is formed in a manner of being inclined downward on an upstream side starting from a countersink outer edge of the countersink female screw hole (25); and
the downstream chamfered portion (28) is formed in a manner of being inclined downward on a downstream side starting from a countersink outer edge of the countersink female screw hole (25).

11. The butterfly valve device (M) according to claim 9 or 10, wherein
the shaft (20) comprises a concave curved portion (26) continuous from the two-sided width portion (23) to the outer contour in a region facing the passage (13) on both sides of the two-sided width portion (23) in an axis direction; and
the step suppressing portion (27, 28) comprises an upstream curved chamfered portion (27r) formed on the shaft (20) in an upstream region of the concave curved portion (26) when the butterfly valve (30) is fully opened, and a downstream curved chamfered portion (28r) formed on the shaft (20) in a downstream region of the concave curved portion (26) when the butterfly valve (30) is fully opened.

12. The butterfly valve device (M) according to any one of claims 1, 2, and 6 to 11, wherein
the butterfly valve (130) is formed in a manner of being inserted into the slit hole (24) from an upstream side with respect to the shaft (20) assembled in the bearing hole (14) of the body (10); and
the step suppressing portion (27, 28) comprises an upstream tapered surface (131a) which is formed on the butterfly valve (130) and whose plate thickness increases from the upstream side toward the two-sided width portion (23) when the butterfly valve (130) is fully opened.

13. The butterfly valve device (M) according to any one of claims 1, 2, and 9 to 11, wherein
the butterfly valve (330) is formed in two parts, comprising an upstream valve (331) that is inserted into the slit hole (24) from an upstream side and a downstream valve (335) that is inserted into the slit hole (24) from a downstream side with respect to the shaft (20) assembled in the bearing hole (14) of the body (10); and
the step suppressing portion (27, 28) comprises an upstream tapered surface (331a, 331b) which is formed on the upstream valve (331) and whose plate thickness increases from the upstream side toward the two-sided width portion (23) when the butterfly valve (330) is fully opened, and a downstream tapered surface (335a, 335b) which is formed on the downstream valve (335) and whose plate thickness increases from the downstream side toward the two-sided width portion (23) when the butterfly valve (330) is fully opened.

14. The butterfly valve device (M) according to any one of claims 9 to 11, wherein
when an angle formed by the upstream chamfered portion (27) and the two-sided width portion (23) is α and an angle formed by the downstream chamfered portion (28) and the two-sided width portion (23) is β, the two angles are set to satisfy angle α = angle β.

15. The butterfly valve device (M) according to claim 14, wherein
the angle α and the angle β are set in a range of 10° to 46.5°.

16. The butterfly valve device (M) according to any one of claims 3 to 5, wherein
when an angle formed by the upstream chamfered portion (27) and the two-sided width portion (23) is α,
the angle α is set in a range of 10° to 46.5°.

17. The butterfly valve device (M) according to any one of claims 6 to 8, wherein
when an angle formed by the downstream chamfered portion (28) and the two-sided width portion (23) is β,
the angle β is set in a range of 10° to 40°.

18. The butterfly valve device (M) according to any one of claims 1 to 17, wherein
when an outer diameter of the shaft (20) is D and a width dimension of the two-sided width portion (23) in an outer diameter direction of the shaft (20) is W1,
the width dimension W1 is set in a range of 0.4 × D to 0.7 × D.
